# EUROPEAN PATENT SPECIFICATION

(11) **EP 2 973 238 B1**
(45) Date of publication and mention of the grant of the patent: **07.08.2019**
(21) Application number: 14773201.0
(22) Date of filing: 07.03.2014
(51) Int. Cl.: G06K 19/077

(54) **INFORMATION CARRYING CARD FOR DISPLAYING ONE TIME PASSCODES, AND METHOD OF MAKING THE SAME**
INFORMATIONSTRAGENDE KARTE ZUR ANZEIGE EINMALIGER PASSCODES UND VERFAHREN ZUR HERSTELLUNG DAVON
CARTE PORTEUSE D'INFORMATIONS POUR AFFICHER DES MOTS DE PASSE À USAGE UNIQUE, ET SON PROCÉDÉ DE FABRICATION

(30) Priority: 14.03.2013 US 201361783705 P
(43) Date of publication of application: 20.01.2016
(73) Proprietor: X-Card Holdings, LLC, West Chester, PA 19380 (US)
(72) Inventor: COX, Mark, A., West Chester, PA 19382 (US)
(74) Representative: Gerbino, Angelo
(86) International application number: PCT/US2014/021548
(87) International publication number: WO 2014/159026

(56) References cited:
- US-A1- 2007 235 548
- US-A1- 2008 308 641
- US-A1- 2009 127 344
- US-A1- 2009 168 398
- US-A1- 2011 101 109

## Description

### CROSS-REFERENCE TO RELATED APPLICATIONS

This application claims priority to U.S. Provisional Patent Application No. 61/783,705, filed March 14, 2013.

### FIELD OF THE INVENTION

The disclosure relates to information carrying cards such as smart cards. More particularly, the disclosed subject matter relates to an information carrying card comprising a component of displaying a one time passcode (OTP), and a method of making the same.

### BACKGROUND OF THE INVENTION

Information carrying cards provide identification, authentication, data storage and application processing. Such cards or parts include key cards, identification cards, telephone cards, credit cards, bankcards, tags, bar code strips, other smart cards and the like. Counterfeiting and information fraud associated with traditional plastic cards causes tens of billions of dollars in the losses each year. As a response, information carrying cards are getting "smarter" to enhance security. Smart card technologies provide solutions to prevent fraud and decrease resulting losses.

Information carrying cards often include an integrated circuit (IC) embedded in a thermoplastic material, such as polyvinyl chloride (PVC). Information has been input and stored in the integrated circuit before a transaction. In use, information carrying cards work in either a "contact" or "contactless" mode. In contact mode, an electronic component on the card is caused to directly contact a card reader or other information receiving device to establish an electromagnetic coupling. In contactless mode, the electromagnetic coupling between the card and the card reading device is established through electromagnetic action at a distance, without the need for physical contact. The process of inputting information into the IC of the information carrying card also works in either of these two modes.
US 2007-0235548 A1 discloses an electronic inlay and the method of making such an electronic inlay. This latter inlay includes a circuit board, a plurality of circuit components attached to the circuit board, a bottom cover sheet, a top cover sheet, and a layer of thermosetting material between the bottom and top cover sheets.
US 2008-0308641 A1 discloses a smart card having a multi-layer substrate, a transponder module disposed in a first layer of the multi-layer substrate, a first antenna disposed in the first layer of the multi-layer substrate, and a second antenna disposed in a second layer of the multi-layer substrate, a switch and a capacitor being in series with the second antenna.
US 2009-0168398 A1 discloses a light emitting display for generating a selectable character comprising a plurality of independently operable light emitting display elements or segments. Each display element comprises: a light guiding medium having a light emitting display face, at least one excitation source (LED) associated with the light guiding medium and independently operable to generate excitation light of a first wavelength range and couple the excitation light into the light guiding medium, and a pattern of at least one phosphor material provided on the light emitting surface and configured to define the light emitting element wherein the phosphor material absorbs at least a part of the excitation light and emits light of a second wavelength range.

When information carrying cards become "smarter," the amount of information stored in each card often increases, and the complexity of the embedded IC's also increases. The cards also need to withstand flexing to protect sensitive electronic components from damage as well as offer good durability during use. A relatively easy and full-scale commercial process having improved productivity at low cost is also desired.

### SUMMARY OF THE INVENTION

The invention provides a core layer for an information carrying card according to claim 1. Preferred embodiments are set out in the dependent claims.

The core layer for an information carrying card comprises at least one thermoplastic layer, an inlay layer, and a crosslinked polymer composition. The inlay layer comprises at least one electronic component configured to display a one time passcode (OTP). At least one portion of the inlayer layer is disposed inside the at least one cavity of the at least one thermoplastic layer. The crosslinked polymer composition is disposed over the at least one thermoplastic layer and contacting the inlay layer. The at least one thermoplastic layer has at least one cavity. At least one portion of the inlay layer is disposed inside the at least one cavity of the at least one thermoplastic layer. The inlay layer comprises at least one light emitting diode (LED) component in some embodiments. In some embodiments, such a curable precursor or a base unit for the crosslinked polymer composition is selected from the group consisting of acrylate, methacrylate, urethane acrylate, ester acrylate, silicone acrylate, epoxy acrylate, silicone, epoxy and urethane. The curable precursor may comprise a monomer, an oligomer or a prepolymer. The crosslinked polymer composition may or may not contain any filler.

In some embodiments, the at least one electronic component in the inlay layer configured to display a one time passcode (OTP) comprises a power source, at least one microcontroller connected with the power source, an activation switch connected with the at least one microcontroller, and a display module connected with the activation switch. The power source can be a battery or a rechargeable battery. The at least one microcontroller can comprise a primary microcontroller and a dual interface microcontroller. The activation switch can be selected from a group consisting of a capacitance switch, a membrane switch, a metal dome switch, and a piezoelectric switch. In some embodiments, the display module is configured to display at least a digit selected from a group consisting of 0, 1, 2, 3, 4, 5, 6, 7, 8, and 9. In some embodiments, the display module comprises at least one seven-segment display. Each of the at least one seven-segment display configured to display a digit selected from 0 to 9. In some embodiments, the display module comprises a number of seven-segment display. For example, the number of seven-segment display is an integer in the range of from 3 to 6. The display module can comprise a frame, a plurality of light emitting diode (LED) components disposed inside the frame, and a phosphor material disposed inside the frame and contacting the plurality of LED components. The phosphor material comprises a polymer, a dopant or any other suitable additives. The phosphor material is configured to display one color, for example, one color selected from green, yellow and red. In the core layer for an information carrying card in some embodiments, the inlayer layer comprises at least one integrated circuit (IC) comprising algorithm and configured to generate an OTP value to be displayed in the display module.

In additional embodiments, an information carrying card comprises a core layer as described above. The information carrying card can be made using a process such as thermal lamination. The information carrying card comprises at least one display module which comprises at least one electronic component such as LED components. The information carrying card is configured to display a one time passcode (OTP).

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. In some
instances, the dimensions of the various features are arbitrarily expanded or reduced for clarity. Like numerals denote like features throughout the specification and the figures.
FIGS. 1-6 illustrate cross sectional views of layered structures at different steps in an exemplary process of forming a core layer of an information carrying card, in accordance with some embodiments.
FIG. 1 illustrates a cross sectional view of a first release film.
FIG. 2 illustrates a cross sectional view of a second release film disposed over the first release film of FIG. 1.
FIG. 3 illustrates a section view of a first thermoplastic layer having at least one cavity disposed over the two release films of FIG. 2.
FIG. 4 is a cross sectional view of the layers after an inlay layer is disposed partially or fully inside the cavity of the first thermoplastic layer of FIG. 3.
FIG. 5 is a cross sectional view of the layers of FIG. 4 after a crosslinkable polymer composition is dispensed over the inlay layer inside the cavity.
FIG. 6 is a cross sectional view of the resulting layers after placing a third and a forth release film over the layers of FIG. 5.
FIG. 7 is a flow chart diagram illustrating an exemplary process of forming a core layer of an information carrying card, in accordance with some embodiments.
FIG. 8 is a flow chart diagram illustrating another exemplary process forming a core layer of an information carrying card, in accordance with some embodiments.
FIG. 9 is a cross sectional view of an exemplary core layer of an information carry card, which is fabricated according to the structure in FIGS. 1-6 and steps in FIG. 8.
FIG. 10 is a cross sectional view of another exemplary core layer of an information carry card at a final stage according to the steps in FIG. 8 in some embodiments.
FIG. 11 is an exemplary information carrying card comprising a component of displaying a one time passcode (OTP) in accordance with some embodiments.
FIG. 12 illustrates an exemplary inlay layer for an information carrying card of displaying an OTP in accordance with some embodiments.
FIG. 13 illustrates an exemplary seven-segment display for displaying the digits from 0 to 9 in accordance with some embodiments.
FIG. 14 is an exemplary seven-segment display comprising LED components and phosphor for displaying the digits from 0 to 9 in accordance with some embodiments.
FIGS. 15-20 are top down views illustrating a process of making a three-digit display module comprising three seven-segment displays in accordance with some embodiments.
FIGS. 21-26 are cross-sectional views illustrating a process of FIGS. 15-20.

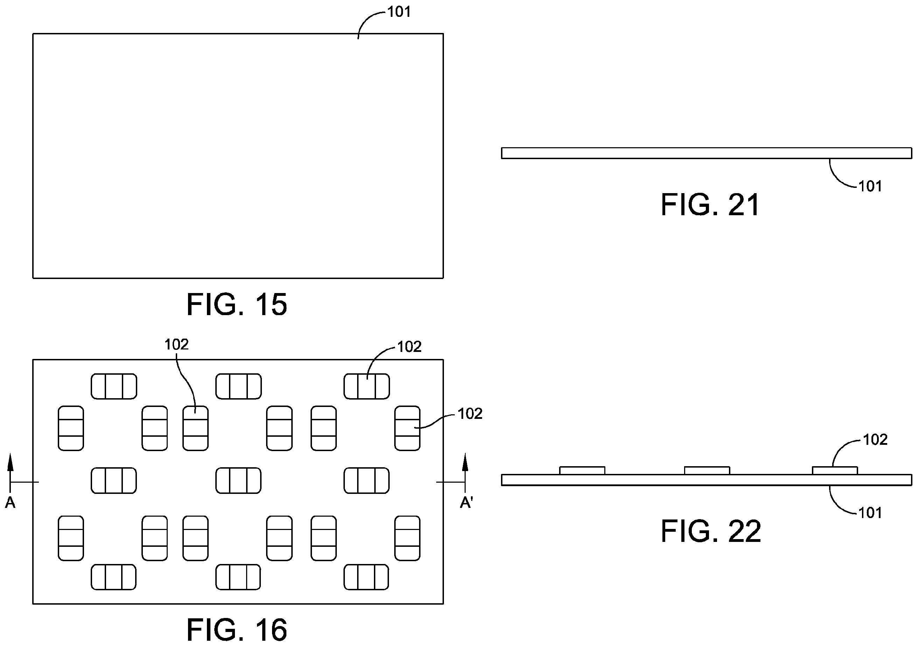

FIGS. 15 and 21 illustrate a substrate for a display module.
FIGS. 16 and 22 illustrate a plurality of LED components disposed over the substrate of a display module of FIGS. 15 and 21.

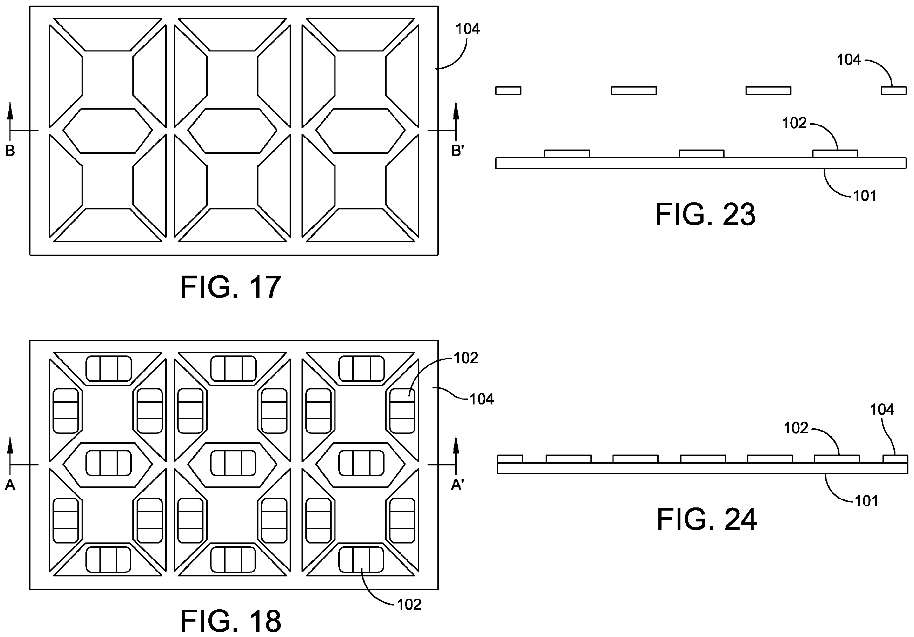

FIG. 17 is a top down view of a frame for a three-digit display module comprising three seven-segment displays in accordance with some embodiments.
FIG. 23 is a cross sectional view illustrating the frame of FIG. 17 above the structure of FIG. 22.

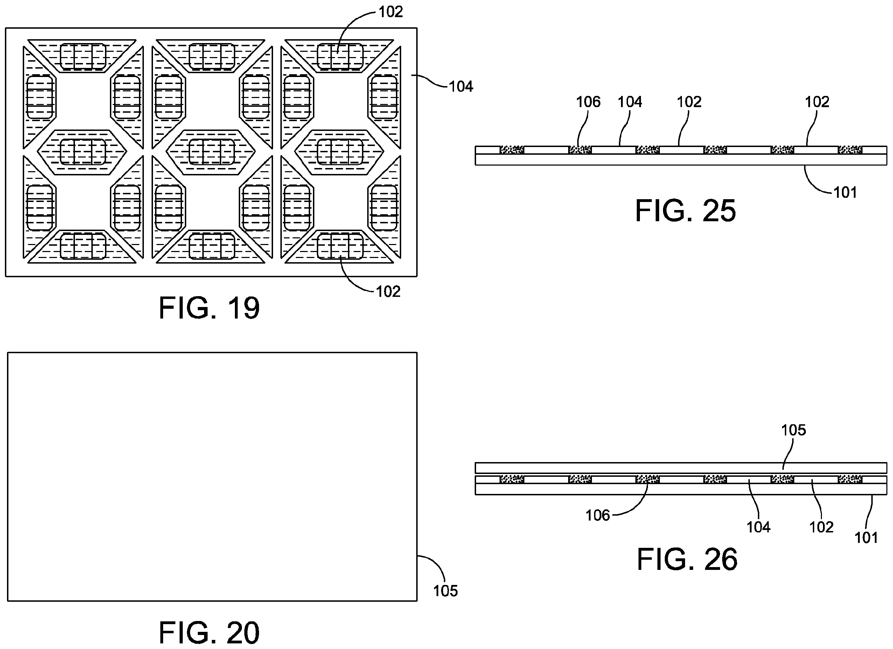

FIGS. 18 and 25 illustrate the resulting structure after the frame of FIG. 17 is applied over the structure of FIG. 22.
FIGS. 19 and 25 illustrate the resulting structure after an organic phosphor material is applied over the structure of FIGS. 18 and 24.
FIGS. 20 and 26 illustrate the resulting structure after a release film is applied over the structure of FIG. 19 and FIG. 25.

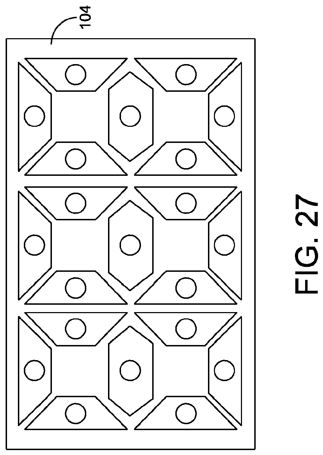

FIG. 27 is a top down view of another exemplary three-digit display module comprising LED components in three seven-segment displays in accordance with some embodiments.

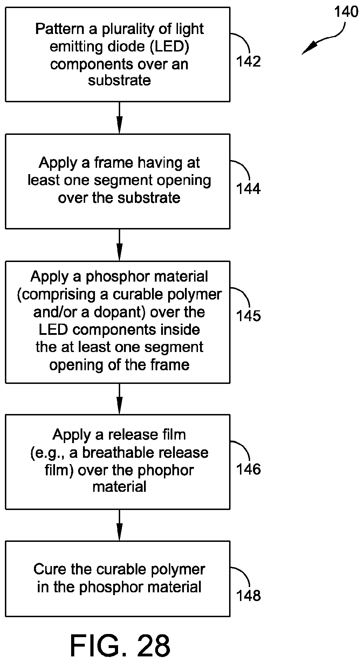

FIG. 28 is a flow chart diagram illustrating an exemplary process of making an inlay comprising a display module in accordance with some embodiments.

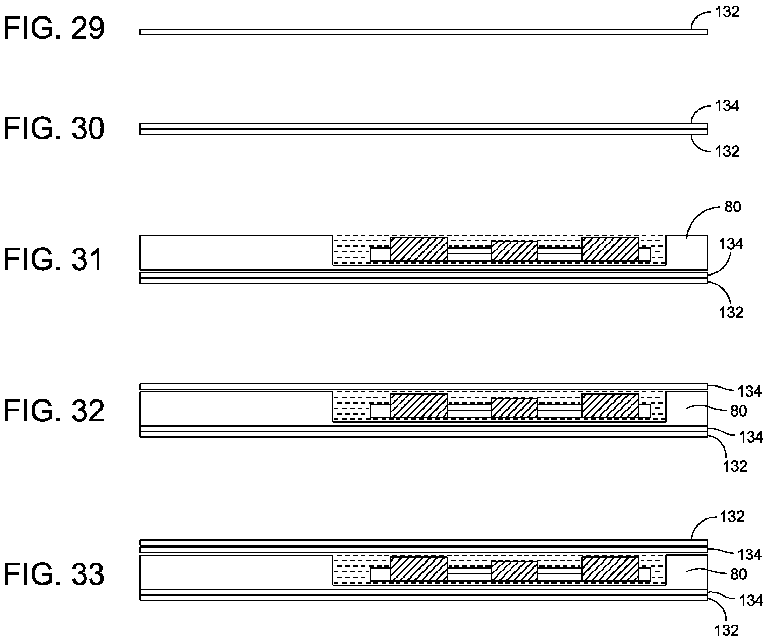

FIGS. 29 -33 illustrate cross sectional views of the layer structure at different steps of an exemplary process of making an exemplary information carrying card, in accordance with some embodiments.
FIG. 29 is a cross sectional view of a transparent film.
FIG. 30 is a cross sectional view of a printable film disposed over the transparent film of FIG. 29.
FIG. 31 is a cross sectional view of the layer structure after an exemplary core layer is disposed over the two films of FIG. 30.
FIG. 32 is a cross sectional view of the resulting layer structure after a second printable film is disposed over the layer structure of FIG. 31.
FIG. 33 is a cross sectional view of the resulting layer structure after a second transparent film is disposed over the layer structure of FIG. 32.

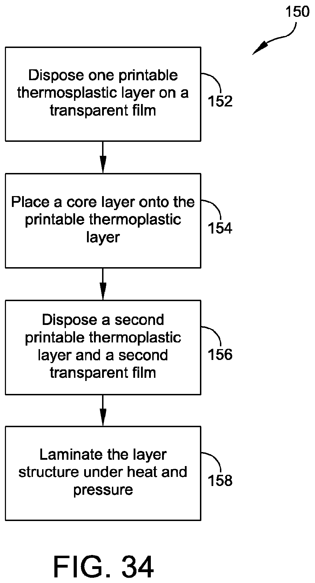

FIG. 34 is a flow chart diagram illustrating an exemplary process of making an exemplary information carrying card.

### DETAILED DESCRIPTION OF PREFERRED EMBODIMENTS

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that any apparatus to be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For brevity, unless expressly stated otherwise, references to "information carrying card" or "smart card" made throughout this description are intended to encompass at least key cards, identification cards, telephone cards, credit cards, bankcard, power cards, tags, bar code strips, any part comprising an integrated circuit (IC), and the like. "Information carrying card" or "smart card" also includes a wide variety of shapes, which include but are not limited to rectangular sheets, circular sheets, strips, rods and rings. "Information carrying card" or "smart card" also includes any information carrying parts of both "contact" and "contactless" modes. "Information carrying card" or "smart card" also encompasses any information carrying cards with or without an on-board power supply. An information carrying card comprising a power supply is also referred as a "power card."

### 1. Core layer for Information Carrying Card:

In some embodiments, a core layer for an information carrying card comprises at least one thermoplastic layer, an inlay layer, and a crosslinked polymer composition. The inlay layer comprises at least one electronic component configured to display a one time passcode (OTP). At least one portion of the inlayer layer is disposed inside the at least one cavity of the at least one thermoplastic layer. The crosslinked polymer composition is disposed over the at least one thermoplastic layer and contacting the inlayer layer. In some embodiments, the least one thermoplastic layer has at least one cavity. At least one portion of the inlayer layer is disposed inside the at least one cavity of the at least one thermoplastic layer. The inlay layer comprises at least one light emitting diode (LED) component in some embodiments.

The crosslinked polymer composition can comprise a base unit selected from the group consisting of acrylate, methacrylate, urethane acrylate, ester acrylate, silicone acrylate, epoxy acrylate, silicone, urethane, epoxy and the like. In some embodiments, the crosslinked polymer composition comprises a base unit selected from the group consisting of acrylate, methacrylate, urethane acrylate, ester acrylate, silicone acrylate, and silicone. For example, the crosslinked polymer composition is acrylate or urethane acrylate. The crosslinked polymer can be unfilled, or comprises a filler or additive, such as in the range of about 0.5 wt.% to about 80 wt.% of a filler. The filler can be inorganic or organic. The cross-linked polymer composition is made through curing a cross-linkable polymer composition comprising a curable precursor. The curable precursor is acrylate, methacrylate, urethane acrylate, ester acrylate, silicone acrylate, epoxy acrylate, silicone, urethane, epoxy or the like in some embodiments. The crosslinkable polymer composition can be cured through heat, radiation such as UV, or any combination thereof.

In some embodiments, the at least one electronic component in the inlay layer comprises a power source, at least one microcontroller connected with the power source, an activation switch connected with the at least one microcontroller, and a display module connected with the activation switch. The at least one electronic component is configured to display a one time passcode (OTP). The power source can be a battery or a rechargeable battery. The at least one microcontroller can comprise a primary microcontroller and a dual interface microncontroller in some embodiments. The activation switch can be a capacitance switch, a membrane switch, a metal dome switch, a piezoelectric switch, or any combination thereof. The activation switch is a metal dome switch in some embodiments. In some embodiments, the display module is configured to display at least a digit selected from a group consisting of 0, 1, 2, 3, 4, 5, 6, 7, 8, and 9. An alphabet letter or any other symbol can be also displayed. In some embodiments, the display module comprises at least one seven-segment display. Each of the at least one seven-segment display configured to display a digit selected from 0 to 9. The display module can comprise a number of seven-segment display. For example, the number of seven-segment display is an integer in the range of from 3 to 6. The display module can comprise a frame, a plurality of LED components disposed inside the frame, and a phosphor material disposed inside the frame and contacting the plurality of LED components. The phosphor material can comprise a polymer, a dopant or any other suitable additives. The phosphor material is configured to display one color, for example, one color selected from green, yellow and red. In the core layer for an information carrying card in some embodiments, the inlayer layer comprises at least one integrated circuit (IC) comprising algorithm and configured to generate an OTP value to be displayed in the display module. The inlay layer is configured to have seeding capability. The seeding capability is based on contacts, infrared, radio frequency or other methods to communicate and store seed values necessary to calculate OTP values after the information carrying card is activated.

The at least one electronic component can be partially or fully disposed inside the cavity over the at least one thermoplastic layer. The size of the at least one cavity on the first thermoplastic layer is larger than the size of the inlay layer in some embodiments. The size of the at least one cavity on the first thermoplastic layer is substantially the same as the size of the inlay layer in some other embodiments. The size of the at least one cavity on the first thermoplastic layer is substantially the same as the size of a portion of the inlay layer in some other embodiment. The inlay layer may also comprise at least one sheet of metal, ceramic, metal containing material, ceramic containing material, plastics or the like.

This invention also provides a method for forming such a core layer of an information carrying card.

### 1.1 General Method for Making Core Layer for Information Carrying Card:

A general method for making a core layer for an information carrying card and the resulting information carrying card in the present disclosure are disclosed in U.S. Patent Application No. 13/801,630 filed March 13, 2013, and U.S. Patent Application No.13/801,677; filed March 13, 2013, which are hereby incorporated by reference in entirety.

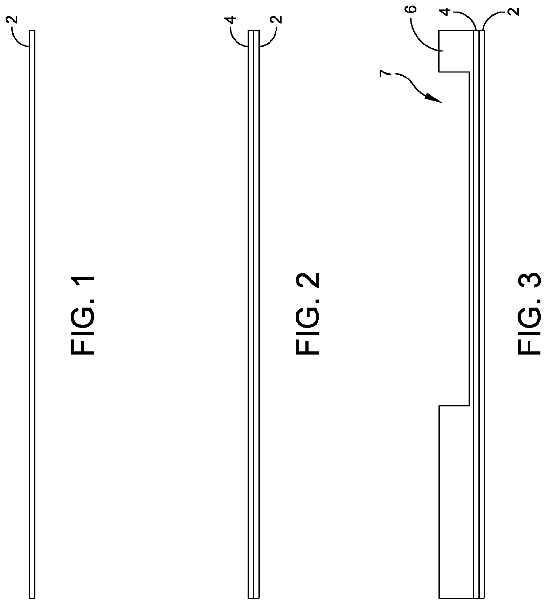

Referring to FIGS. 1 and 2, first release film 2 may be a sheet of polytetrafluoroethylene under the trade name Teflon®, any other fluoropolymer, silicone, a fluoropolymer or silicone coated films. A second release film 4 is disposed over first release film 2. Second release film 4 can be formed from the same material and process as first release film 2. In some embodiments, a breathable release film is preferred. Examples of a breathable release film as second release film 4 is a silicone coated paper. For example, second release film 4 may take the form of a silicone coated, unbleached parchment baking paper, available from Regency Wraps company under the trade name of "If you care." The two release films are shown for the purpose of illustration only. Only one or no release film may be used in some embodiments.

Referring to FIG. 3, a first thermoplastic layer 6 has at least one cavity 7, which is disposed over release films 2 and 4. First thermoplastic layer 6 can be molded or laminated from one or more layers of thermoplastic films. Examples of materials that are suitable for use in forming first thermoplastic layer 6 include polyvinyl chloride (PVC), a copolymer of vinyl chloride, polyolefin, polycarbonate, polyester, polyamide, acrylonitrile butadiene styrene copolymer (ABS), and the like. The first thermoplastic layer 6 may be a PVC, or a copolymer of vinyl chloride and another monomer such as vinyl ether, vinyl ester or vinyl acetate, or a compound or blend of PVC and a vinyl chloride polymer. Examples of PVC films suitable for use with the invention are available from suppliers such as Klockner Pentaplast of America, Inc. of Gordonsville, VA; and Shijiazhuang Eurochem Co. Ltd of China. Examples of such copolymer resins are available from Dow Chemical Company under trade name of UCAR®, and from BASF of Ludwigshafen, Germany under trade name of Laroflex®. UCAR® is a copolymer of vinyl chloride and vinyl acetate. The grades include YYNS-3, VYHH and VYHD. Laroflex® is a copolymer of vinyl chloride and vinyl isobutyl ether. The grades include MP25, MP 35, MP45 and MP60. All of these polymer resins may be supplied as fine powder. A powder of these copolymers can be added to modify PVC resins for films. First thermoplastic layer 6 having at least one cavity can be formed by die-cutting one or more thermoplastic film and then laminating and heating one or more thermoplastic films.

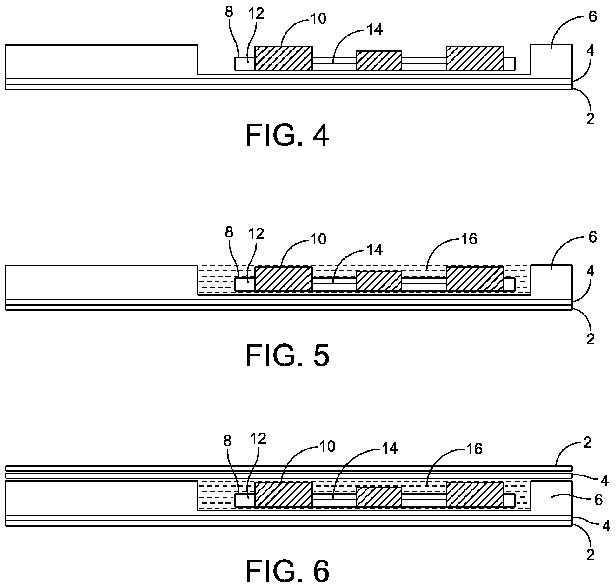

Referring to FIG. 4, at least one portion of an inlay layer 8 is disposed inside at least one cavity 7 of the first thermoplastic layer 6. The inlay 8 is partially or fully disposed inside cavity 7. Inlay layer 8 comprises at least one active or passive electronic component 10 embedded or surface mounted on a supporting film 12. Inlay layer 8 may comprise a printed circuit board (PCB). Electronic component 10 may be embedded or surface mounted on the PCB supporting material. Examples of supporting film 12 include but are not limited to polyimide, polyester such as PET, glass filled epoxy sheet such as FR-4. A printed circuit board (PCB) having all the components are abbreviated as PCBa. For brevity, the references to PCB in this disclosure will be understood to encompass any PCBs including PCBa. Examples of electronic component 10 inside inlay layer 8 include but are not limited to active or passive electronic components, e.g., an integrated circuit (IC), a battery for a "power card," an antenna, and a functional component such as light emitting diodes (LED). Electronic components are interconnected via wires or traces 14. Supporting film 12 may be a polymer based dielectric material. Inlay layer 8 may have any dimension relative to the size of a cavity in first thermoplastic layer 6. Inlay layer 8 may be partially or fully disposed in such a cavity. In some embodiments, the size of the cavity on first thermoplastic layer 6 is larger than the size of inlay layer 8. Inlay layer 8 may be fully disposed in the cavity. In some embodiments, the size of the cavity in first thermoplastic layer 6 is substantially the same as or slightly larger than the size of inlay layer 6 of PCB. The shape of the cavity often matches with the shape of inlay layer 8. In some embodiments, the size of the at least one cavity on first thermoplastic layer 6 is less than the size of inlay layer 8. The size of the at least one cavity is substantially the same as or slightly larger than a portion of inlay layer 8 of the PCB. For example, the shape and size of one cavity may match with one electronic component 10. Examples of electronic component 10 include but are not limited to a battery or an active or passive electronic component, e.g., an integrated circuit (IC) in inlay layer 8. In some embodiments, inlay layer 8 may comprise a piece or a sheet of metal, ceramic, metal containing material, ceramic containing material, plastic or the like. Examples of suitable materials for this piece or sheet include but are not limited to platinum, copper, tungsten, metallized power containing materials, alumina, silica, and ceramic powder containing materials. This piece or sheet may be in a certain color or weight, having certain visual or other sensational characteristics.

Referring to FIG. 5, the resulting layer, after a cross-linkable polymer composition 16, is dispensed over the first thermoplastic layer 6, and the inlay layer 8 inside the cavity 7. The crosslinkable polymer composition 16 may be also dispensed over the first thermoplastic layer 6 outside the cavity some embodiments. A cross-linkable polymer composition 16 formed in accordance with the invention often comprises a curable precursor, in a liquid or paste form. Such a curable precursor may be acrylate, methacrylate, urethane acrylate, silicone acrylate, epoxy acrylate, urethane, epoxy, silicone or the like. The crosslinkable polymer composition may be unfilled in some embodiments, and comprises filler or other additives in some other embodiments. The crosslinkable polymer composition may comprise in the range of about 0.5 wt.% to about 80 wt.% of the filler. The filler can be inorganic or organic filler. For example, the filler can be a particulate thermoplastic filler such as polyolefin, polyvinyl chloride (PVC), a copolymer of vinyl chloride and at least another monomer, or a polyester such as polyethylene terephthalate (PET). The at least another monomer in the vinyl chloride co-polymer filler may be vinyl ester, vinyl acetate or vinyl ether in some embodiments. The particulate thermoplastic filler may be a compound or a blend comprising a thermoplastic resin, for example, a compound or a blend comprising PVC.

The curable precursor in the crosslinkable polymer composition 16 may comprise a monomer, an oligomer or pre-polymer having functional groups. The precursor may be cross-linkable under a regular curing conditions including but not limited to heating, radiation such as ultraviolet (UV) light, moisture and other suitable conditions. The curable precursor may be in liquid or paste form. Its viscosity may be in the range of 1-100,000 cps. In some embodiments, the curable precursor is urethane acrylate. These curable precursors are readily available from specialty chemical suppliers. Examples of these suppliers include but are not limited to Dymax Corporation of Torrington, CT and Sartomer USA, LLC of Exton, PA.

In some embodiments, a particulate thermoplastic filler may be used. Examples of a thermoplastic filler include, but are not limited to polyolefin, PVC, polyester, copolymer, terpolymer and the like. A powdered polymer that provides adequate results may be a compound or a blend comprising PVC, or a modified PVC. The particulate thermoplastic filler can be a copolymer of vinyl chloride and at least another monomer, which may be vinyl ester, vinyl acetate or vinyl ether. Examples of such a copolymer are available from Dow Chemical Company under trade name of UCAR™, and from BASF of Ludwigshafen, Germany under trade name of Laroflex™. UCARTM is a copolymer of vinyl chloride and vinyl acetate. The grades include YYNS-3, VYHH and VYHD. Laroflex™ is a copolymer of vinyl chloride and vinyl isobutyl ether. The grades include MP25, MP 35, MP45 and MP60. All of these polymer resins are often supplied in the form of fine powder. Particulate thermoplastic filler might be obtained through suspension or emulsion polymerization of one or more corresponding monomers or, through pulverization of solid plastics. The particulate form can be of any size, by way of example and not limitation. The particles may be in the range of 0.5- 200 microns. In some embodiments, the particles are in the range of 1-1000 nm.

Cross-linkable polymer composition 16 may further comprise at least one curative based on general principles of polymer chemistry. Such a cross-linkable polymer composition 16 becomes a solid cross-linked composition 18 after curing. Preferably, such a cross-linked composition 18 is more flexible than the first thermoplastic layer 6 in some embodiments. For example, the cross-linkable composition 16 comprises a first curative for thermal curing and a second curative for radiation curing. During the curing or cross-linking reaction, such a cross-linkable composition transforms into a solid cross-linked polymer composition. Such a cross-linked polymer composition 18 is also known in the art as a "thermosetting" polymer or "thermoset" to distinguish it from a thermoplastic polymer. In some embodiments, the cross-linkable polymer composition is unfilled. In some other embodiment, the cross-linkable polymer composition comprises a range of about 0.5 wt. % to about 80 wt. %, and preferably in the range of about 5 wt. % to about 50 wt. %, of a filler.

Examples of a suitable crosslinkable polymer composition 16 include but are not limited to a formulation comprising a curable precursor such as acrylate or urethane acrylate. Examples of such a formulation include but are not limited to X-685-31-1 and X-685-31-2, available from Dymax Corporation of Torrington, CT. X-685-31-1 is a formulation comprising isobornyl acrylate, 2-hydroxyethyl methacrylate, 2-hydroxy-3-phenoxypropyl acrylate, t-butyl perbenzoate and a photoinitiator. Its viscosity is 1047 cP. X-685-31-2 is also a formulation comprising isobornyl acrylate, 2-hydroxyethyl methacrylate, 2-hydroxy-3-phenoxypropyl acrylate, t-butyl perbenzoate and a photoinitiator. Its viscosity is 1025 cP. These formulations were dispensed over the inlay layer, and then cured at a raised temperature of less than 150°C under a pressure of less than 2 MPa. The resulting core layer and resulting information carrying cards were successfully made. These examples are only intended to illustrate embodiments in accordance with the invention, and as such should not be construed as imposing limitations upon the claims.

Cross-linkable polymer composition 16, which is packed in a syringe, can be dispensed using the standard dispensing apparatus or equipment for adhesives, encapsulants, sealants and potting compounds. The amount to cross-linkable composition 16 to be dispensed can be calculated and controlled based on the volume of the cavity and the inlay layer 8.

In some embodiments, the crosslinkable polymer composition 16 is degased in a vacuum chamber after being dispensed over the first thermoplastic layer 6. The degassing process through vacuum can be done without any cover sheet over the structure of FIG. 5 in some embodiments. Optionally, a second thermoplastic layer (not shown) is disposed over the structure of FIG. 5 before the vacuum process. The second thermoplastic layer comprises a thermoplastic material selected from polyvinyl chloride, copolymer of vinyl chloride, polyolefin, polycarbonate, polyester, polyamide, and acrylonitrile butadiene styrene copolymer (ABS). The second thermoplastic layer might be the same as the first thermoplastic layer 6. Its thickness may be in the range of 0.025 mm to 0.25 mm. This thermoplastic layer becomes a part of the core layer if used. In some other embodiments, at least one of the release films in FIG. 6 is disposed over the structure of FIG. 5 before the vacuum process.

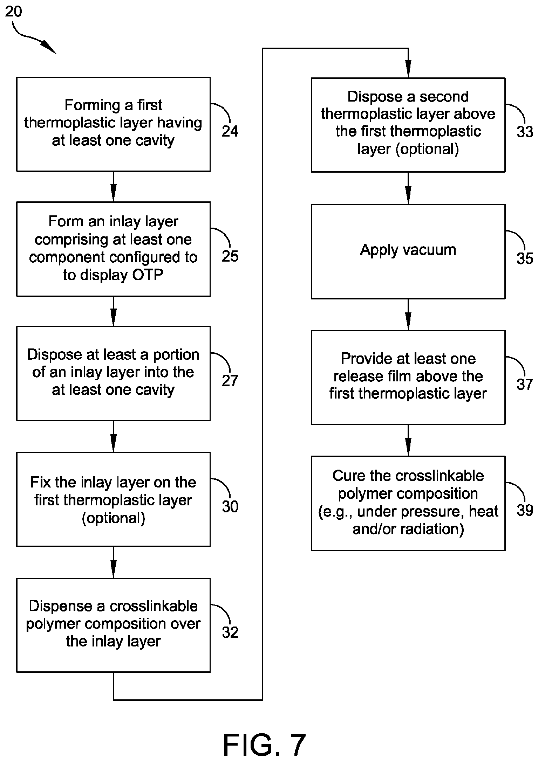

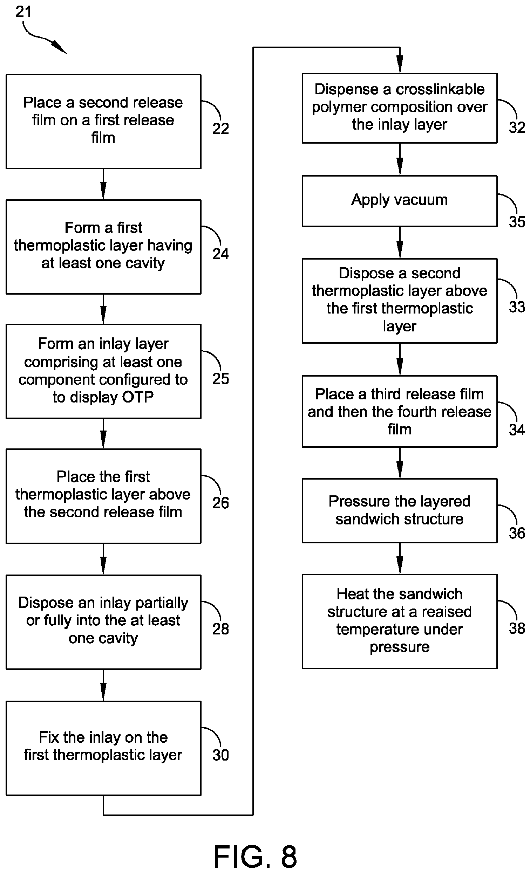

Referring to FIG. 6, the resulting layers after placing a third and a forth release film over the layers shown in FIG. 5, form a sandwich structure. The third and fourth release films can be any kind of release films, and in some embodiments, second and third release films 4 are formed of the same material. The first and fourth release films 2 are may also be formed from the same materials. For example, in some embodiments, the second and third release films 2 may be formed from a breathable silicone coated paper. The first and fourth release films 4 are often formed from a fluoropolymer such as polytetrafluoroethylene often offered under a trade name of Teflon®. The two release films are shown for the purpose of illustration only. Only one or no release film may be used in some embodiments. The resulting sandwich or layered structure of FIG. 6 is placed under pressure and heated to form a core layer for an information carrying card, as illustrated in the exemplary process of FIG. 7 and 8.

Referring to FIG. 7, a process 20 forming a core layer of an information carrying card, in accordance with some embodiments includes the following steps. At step 24, a first thermoplastic layer 6 having at least one cavity 7 is formed. A first thermoplastic layer 6 has at least one cavity 7 can be molded or laminated.

In some embodiments, the first thermoplastic layer 6 is formed through steps of die-cutting one or more thermoplastic films; and then hot laminating with one or more uncut thermoplastic films. For example, one or more thermoplastic films are provided. One thermoplastic film, which can be in the range of 0.025 mm to 0.5 mm in thickness, is cut with a hole and placed above another thermoplastic film, which can be in the range of 0.025 mm to 0.25 mm in thickness. The combination of the two films are then laminated to form a first thermoplastic layer 6 having at least one cavity 7.

At step 25, an inlay layer 8 is formed. For example, an inlay layer 8 comprising at least one electronic component configured to display OTP is described in next section.

At step 27 of FIG. 7, at least one portion of an inlay layer 8 is disposed into the at least one cavity 7. In some embodiments, the size of the at least one cavity on first thermoplastic layer 6 is larger than the size of the inlay layer 8. In some embodiments, the size of the at least one cavity on first thermoplastic layer 6 is substantially the same as the size of the inlay layer 8. In other embodiments, the size of the at least one cavity on first thermoplastic layer 6 is substantially the same as the size of a portion of the inlay layer 8.

At step 30 which is optional, the inlay layer 8 is fixed on the first thermoplastic layer 6. In some embodiments, inlay layer 8 is fixed on first thermoplastic layer 6 using an instant adhesive, a solder or the like. For example, a plurality of holes is formed on the inlay layer 8 by cutting some portions of supporting film 12 without any electronic component 10 and interconnects 14. An instant adhesive is applied to the holes. Examples of an instant adhesive include but are not limited to cyanoacrylate. Inlay layer 8 can be fixed to first thermoplastic layer 6 in a period as short as a few seconds. In some embodiments, inlay layer 8 is fixed on first thermoplastic layer 6 using local heating under pressure or any other suitable method.

At step 32 (FIG. 7), a crosslinkable polymer composition 16 is dispensed over inlay layer 8. In some embodiments, the crosslinkable polymer composition 16 is dispensed into the cavity 17. The cross-linkable polymer composition may directly contact the electronic components 10 including active or passive electronic components, e.g., an integrated circuit (IC). The amount of cross-linkable polymer composition 16 is predetermined and controlled. Any extra material exceeding the top surface of first thermoplastic layer 6 may be removed. In some embodiments, the curable precursor in the crosslinkable polymer composition 16 is unfilled acrylate or urethane acrylate. In some embodiments, the crosslinkable polymer composition comprises a particulate thermoplastic filler such as PVC, a compound or a blend comprising PVC, or a copolymer of vinyl chloride and at least another monomer such as vinyl ester or vinyl ether.

Process 20 may also comprise an optional step 33. At step 33, a second thermoplastic layer is disposed above first thermoplastic layer 6 after step 32. The second thermoplastic layer might be the same as the first thermoplastic layer 6. Its thickness may be in the range of 0.025 mm to 0.25 mm. This thermoplastic layer becomes a part of the core layer if used.

At step 35, a vacuum is applied onto the crosslinkable polymer composition 16 in a vacuum chamber. The pressure range is in the range of 10 Pa to 1000 Pa. The vacuum can be maintained for 0.5 to 10 minutes, preferably 1-3 minutes. The vacuum is released in the end of a cycle. One or multiple cycles can be used to achieve a bubble free sample. Such a vacuum process is performed at low temperature, preferably at room temperature.

At step 37, at least one release film such as release film 2 or 4 described in FIG. 6 is provided above the first thermoplastic layer 6. A release film 2 or 4 is placed above the second thermoplastic layer if the second thermoplastic layer is used.

At step 39, the crosslinkable polymer composition 16 is cured to form a crosslinked polymer composition 18. This curing process can be achieved under pressure through a thermal curing method. An additional curing can be performed through a radiation (such as UV) curing mechanism.

Referring to FIG. 8, a process 21 forming a core layer of an information carrying card, in accordance with some embodiments includes the following steps. At step 22, a second release film 4 is placed above a first release film 2. At step 24, a first thermoplastic layer 6 having at least one cavity is formed. A first thermoplastic layer 6 has at least one cavity 7 can be molded or laminated. In some embodiments, the first thermoplastic layer 6 is formed through steps of die-cutting one or more thermoplastic films; and then hot laminating with one or more uncut thermoplastic films.

At step 26, first thermoplastic layer 6, having at least one cavity, is placed above first and second release film (4 and 6). At step 28, an inlay layer 8 is placed at least partially into the at least one cavity on first thermoplastic layer 6. The inlay layer 8 may comprise a printed circuit board (PCB). In some embodiments, the size of the at least one cavity on first thermoplastic layer 6 is larger than the size of the inlay layer 8 of the PCB. In some embodiments, the size of the at least one cavity on first thermoplastic layer 6 is the same as the size of the inlay layer 8 of PCB. In other embodiments, the size of the at least one cavity on first thermoplastic layer 6 is the same as the size of a portion of the inlay layer 8 of PCB.

Following step 28, the process optionally comprises step 30 of fixing the inlayer onto the first thermoplastic layer 6, for example, using an instant adhesive, a solder ball, or the like. At step 32, a crosslinkable polymer composition 16 is dispensed over the inlay layer 8. At step 35, a vacuum is applied to eliminate any bubble in crosslinkable polymer composition 16.

At step 34, third release film and fourth release film 4 are placed on the layered structure to form a sandwich structure (FIG. 6). The third release film is placed first followed by the fourth release film. In some embodiments, the third release film is formed from the same material as the second release film 4, which is preferably a breathable release film. The fourth release film may be formed from the same material as first release film 2. In some embodiments, the first and fourth release films are a polytetrafluoroethylene (under the trade name Teflon®) sheet. At step 36, the layered structure above is placed under pressure, e.g., a pressure of less than about 2 MPa.

At step 38, the layered structure is heated under pressure. A suitable temperature would be one that is sufficiently high to partially or fully cure the cross-linkable polymer composition 16, or hot laminating first thermoplastic film 6, or both. After the heat treatment, the cross-linkable polymer composition 16 forms a solid. Such a cross-linked polymer composition 18 has good adhesion with first thermoplastic layer 6 and inlay layer 8 including electronic component 10 and supporting film 12. In some embodiments, such a cross-linked composition is more flexible than first thermoplastic film 6. In some embodiments, the temperature is in the range of 65-232 °C. In some embodiments, the temperature is less than 150°C.

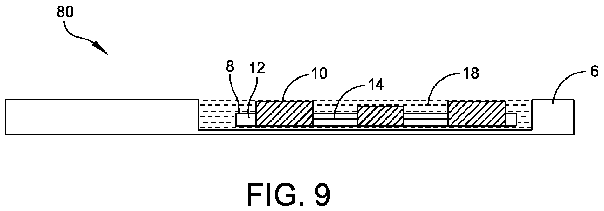

Process 21 may further comprise cooling the layer structure and peeling off the first, second, third and fourth release films. Process 21 may further comprise a step of curing the cross-linkable polymer composition 16 using visible light, UV or other radiation curing. It may also comprise a step of curing via the introduction of moisture or the promotion of other chemical reactions. After process 21, the cross-linkable polymer composition 16 is cured so as to yield a solid. After the release films are peeled away, a core layer for an information carrying card is formed. The core layer comprises a first thermoplastic layer 6, an inlay layer 8 and a cross-linked polymer composition 18. The crosslinkable polymer composition 16 becomes into the crosslinked polymer composition 18 in solid state. Different reference numerals are used for the purpose of differentiation only even though they may share the same chemical composition. The exemplary core layers for an information carrying card from process 21 are shown in FIGS. 9-10.

Referring to FIG. 9, an exemplary core layer 80 of an information carry card, is fabricated according to the structure depicted FIG. 1-6 and steps of FIG. 7 or 8. More particularly, the exemplar core layer 80 comprises a first thermoplastic layer 6, an inlay layer 8, and a cross-linked polymer composition 18. First thermoplastic layer 6 is polyvinyl chloride (PVC), a copolymer of vinyl chloride, polyolefin, polycarbonate, polyester, polyamide, acrylonitrile butadiene styrene copolymer (ABS), or the like. Cross-linked polymer composition 18 is formed from a cross-linkable composition 16 as described in related sections above. Inlay layer 8 comprises electronic components 10, for example, at least one printed circuit board (PCB), supporting film 12 and interconnects 14. The electronic components, such as a battery and an active or passive electronic components 10, are connected with interconnects 14. Electronic components 10 are embedded on supporting film 14. The cross-linked polymer composition 18 fills the voids and remaining spaces inside the cavity on first thermoplastic layer 6 and inlay layer 8. In some embodiments, the cross-linked polymer composition 18 directly contacts the outer surface of electronic components 10. Referring once again to FIG. 4, inlay layer 8 may have any dimension relative to the size of a cavity in the first thermoplastic layer 6. Inlay layer 8 may be partially or fully disposed into such a cavity.

In some embodiments, a core layer of an information carry card can include a full open cavity for an inlay. The size of a cavity on the first thermoplastic layer 6 is larger than the size of inlay layer 8. In some embodiments, such a cavity is close to but slightly smaller than the size of an information carrying card. Inlay layer 8 is fully disposed into the cavity. The shape of the cavity may not be the same as the shape of inlay layer 8. In some embodiments, an open inlay cavity is close to the size of an inlay layer 8. The size of a cavity on the first thermoplastic layer 6 is substantially the same as or slightly larger than the size of inlay layer 8. The shape of the cavity matches with the shape of inlay layer 8. In this configuration, inlay layer 8 can be fully disposed inside the cavity on the first thermoplastic layer 6. In some embodiments, an exemplary core layer of an information carry card includes a window cavity partially for an inlay. The size of the at least one cavity on the first thermoplastic layer 6 is less than the size of inlay layer 8. The size of the at least one cavity is substantially the same as or slightly larger than a portion of inlay layer 8. A portion of inlay layer can be cut open for form one or more holes so that an electronic component 10 can be fit into one of the holes. The electronic component 10 in inlay layer 8 can be also inserted from one side of the first thermoplastic layer 6. During the fabrication process, a crosslinkable composition 16 for the crosslinked polymer composition 18 can be applied to from the other side of the first thermoplastic layer 6.

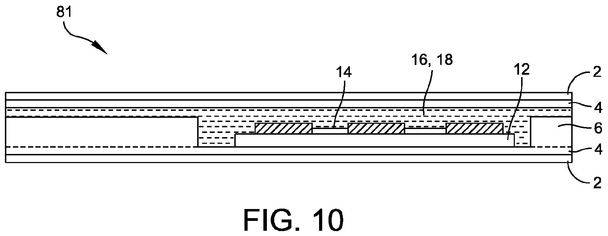

Referring to FIG. 10, another exemplary core layer 81 of an information carry card at a final stage according to the steps in FIG. 8 in some embodiments. It is similar to the core layer 80 of FIG. 9. In some embodiments, the crosslinked polymer composition 18 from the crosslinkable polymer composition 16 is disposed above the first thermoplastic layer 6 outside the cavity 7, for example, in the range of 1 micron to 100 micron in thickness.

### 1.2 An Inlay Layer for Displaying One Time Passcode (OTP)

The present disclosure provides a core layer for an information carrying card comprising at least one thermoplastic layer, an inlay layer, and a crosslinked polymer composition. The inlay layer comprises at least one electronic component configured to display a one time passcode (OTP). The at least one electronic component comprises a display module. The display module comprises LED components in some embodiments. Such a core layer for an information carrying card can survive a hot lamination process in the process of making the core layer or the resulting information carrying card. The hot lamination process involves temperature, pressure and processing time. For example, the temperature can be in the range of from 120 °C to 180 °C. The pressure can be in the range from 1.7 MPa to 2.5 MPa. The processing time can be in the range from 15 minutes to 2 hours for example, from 40- 70 minutes.

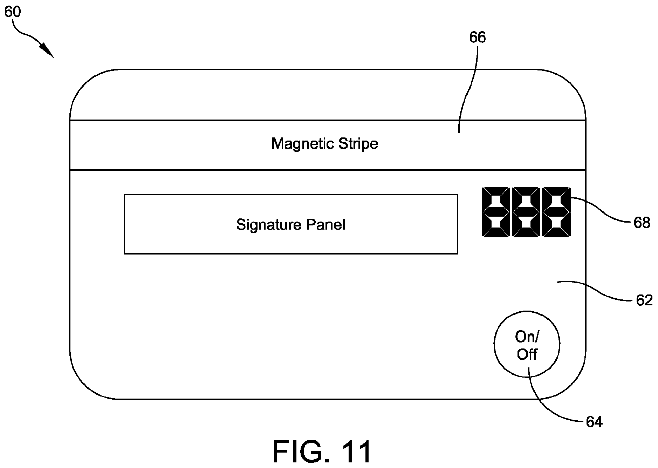

Referring to FIG. 11, an outer surface of an exemplary information carrying card 60 comprising at least one component of displaying a one time passcode (OTP) is illustrated in accordance with some embodiments. On its outer surface of either the front or the back, information carrying card 60 can comprise a card body 62, an area for an "on/off' switch 64, a magnetic stripe 66, a signature panel 67, and a display 68. The display 68 having a three seven-segment display for three digits is for illustration purposely only. The display 68 is not limited to a three-digit display.

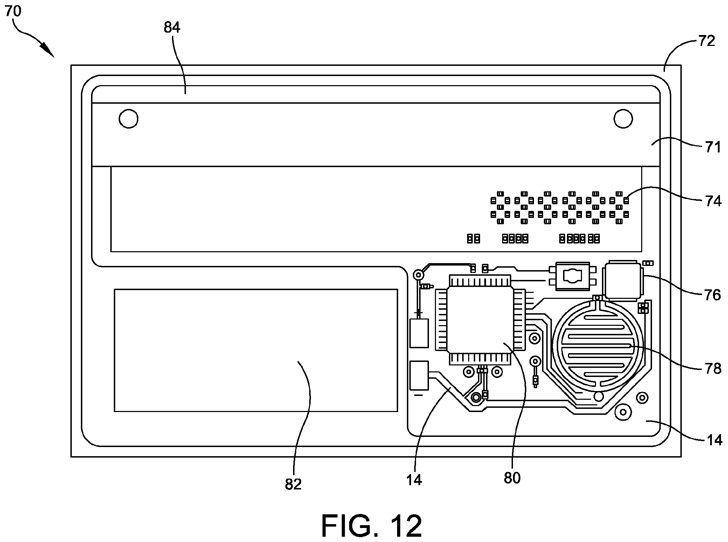

Referring to FIG. 12, an exemplary inlay layer 70 for an information carrying card 60 of displaying an OTP is shown in accordance with some embodiments. Inlay layer 70 can be disposed over a thermoplastic layer 72. Thermoplastic layer 72 can have a cavity and inlay layer 70 can be disposed inside the cavity in some embodiments. Except the display module 74, the inlay layer 70 is mostly embedded inside an information carrying card 60. The inlay layer 70 comprises at least one electronic component configured to display a one time passcode (OTP). In some embodiments, the at least one electronic component in the inlay layer 70 comprises a power source 82, at least one microcontroller (76, 80) connected with power source 82, an activation switch 78 connected with the at least one microcontroller (76, 80), and a display module 74 connected with activation switch 78. Power source 82 can be a battery or a rechargeable battery. The at least one microcontroller (76, 80) can comprise a primary microcontroller 80 and a dual interface microncontroller 76 in some embodiments.

Activation switch 78 can be a capacitance switch, a membrane switch, a metal dome switch, a piezoelectric switch, or any combination thereof. The electronic components are disposed on a supporting film 12 and can be connected with each other through wires 14. Display module 74, which can comprise LED components, can be also connected with other electronic components through wires (not shown in FIG. 12). Inlay layer 70 can further comprise a magnetic component 71 for the magnetic stripe 66 in FIG. 11, and a RF antenna 84.

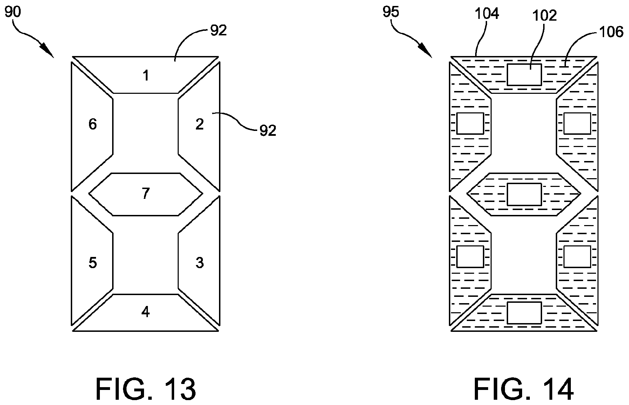

Referring to FIG. 13, display module 74 comprising LED components can comprise at least one seven-segment display 90 for displaying the digits from 0 to 9 in accordance with some embodiments. Each segment 92 can illuminate after the activation switch 78 is switched on. In some embodiments, display module 74 is configured to display at least a digit selected from a group consisting of 0, 1, 2, 3, 4, 5, 6, 7, 8, and 9. An alphabet letter or any other symbol can be also displayed.

Referring to FIG. 14, a seven-segment display 90 may have an exemplary structure 95. The exemplary seven-segment display 95 comprises a frame 104, a plurality of LED components 102 inside frame 104, and a phosphor material 106, which is disposed inside a segment of frame 104 and contacting the plurality of LED components 102. The seven-segment display 95 is configured to display a digit from 0 to 9 in accordance with some embodiments. The phosphor material 106 can comprise a polymer, a dopant or any other suitable additive. The phosphor material 106 is configured to display one color, for example, one color selected from green, yellow and red.

In some embodiments, display module 74 comprises at least one seven-segment display. Each of the at least one seven-segment display configured to display a digit selected from 0 to 9. Display module 74 can also comprise a number of seven-segment display. For example, the number of seven-segment display is an integer in the range of from 3 to 6.

In the core layer for an information carrying card in some embodiments, inlayer layer 70 comprises at least one integrated circuit (IC) comprising algorithm and configured to generate an OTP value to be displayed in the display module 74. The inlay layer is configured to have seeding capability. The seeding capability is based on contacts, infrared, radio frequency or other methods to communicate and store seed values necessary to calculate OTP values after the information carrying card is activated. In some embodiments, an initial seed value is stored in a persistent memory in the inlay layer 70. The initial seed value is to be used by the algorithm to generate a one time passcode. The seed value and the one time passcode are communicated with an outside system through the information carrying card following a communication protocol such as the ISO/IEC 14443 protocol for contactless mode or ISO/IEC 7816 for contact mode communication. A dual interface microcontroller 76 (as shown in FIG. 12) is used for both contact and contactless mode communications. In some embodiments, the contactless protocols are used to allow the seed values to be transmitted to the dual interface microcontroller 76 and temporarily stored in a persistent memory. When the information carrying card for OTP is initially activated, the primary microcontroller 80 (FIG. 12) will the protocol for contact mode through a program to retrieve the seed values from the dual interface microcontroller, and then store the seed values in their permanent location I a persistent memory on the primary microcontroller 80. In some embodiments, the dual interface microcontroller is inductively powered by an external reader through the RF antenna 84 (FIG. 12), the primary microcontroller may not need to be active during the initial stage of having seeding values.

Referring to FIG. 28, an exemplary process 140 of making an inlay comprising a display module 74 can be used in accordance with some embodiments. FIGS. 15-20 illustrate the top down views of the structures during the process of making a three-digit display module comprising three seven-segment displays in accordance with some embodiments. FIGS. 21-26 are cross-sectional views corresponding to FIGS. 15-20.

At step 142, a plurality of light emitting diode (LED) components 102 are patterned over a substrate 101. Substrate 101 for a display module are illustrate in FIGS. 15 and 21. The LED components 102 can be picked and placed onto substrate 101. Examples of substrate 101 include but are not limited to a flexible printed circuit board (PCB). A PCB can be made from polyimide, FR4, polyester, or some other suitable materials. A PCB can be in a thickness in the range from 75 microns to 125 microns. The LED components 102 and other electronic components in the inlay layer can be in a thickness in the range from 275 microns to 400 microns. LED components 102 can be electrically connected with substrate 101 and other electronic components on the inlay layer through wires (not shown). LED components 102 patterned in three seven-segments are for illustration purpose only. They can be patterned in at any number of seven-segment display, for example, for 4, 5 or 6-digit display. LED components 102 can be of any size and shape. For example, FIG. 27 is a top down view of another exemplary three-digit display module comprising LED components in three seven-segment displays in accordance with some embodiments. LED components can be of a spherical shape.

At step 144 of FIG. 28, a frame 104 having at least one segment opening 103 is applied over substrate 101. FIG. 17 is a top down view of frame 104 for a three-digit display module comprising three seven-segment displays in accordance with some embodiments. Referring to FIG. 23, substrate 104 is being applied over substrate 101, over which the plurality of LED components are disposed. The structure after step 144 are illustrated in FIGS. 18 and 24.

At step 145, a phosphor material 106 is applied over the LED components 102 inside the at least one segment opening 103 of frame 104. The at least one of the plurality of LED components 102 are disposed inside one of the at least one segment opening 103 of frame 104. A phosphor material 106 is a substance that radiates visible light after being energized. The phosphor material 106 can comprise a polymer such as a curable polymer, a dopant or any other suitable additives in some embodiments. Examples of a curable polymer in phosphor material 106 include but are not limited to a silicone or epoxy which can be cured through moisture, thermal or radiation curing mechanism. A dopant can be added into the curable polymer. The dopant can diffuse, radiate or reflect light. FIGS. 19 and 25 illustrate the resulting structure after an organic phosphor material is applied over the structure of FIGS. 18 and 24.

At step 146 of FIG. 28, a release film 105 such as a breathable release film is applied over the structure of FIGS. 19 and 25 comprising a phosphor material 106. FIGS. 20 and 26 illustrate the resulting structure after a release film is applied over the structure of FIG. 19 and FIG. 25. The release film 105 can be the same as any other release film in the present disclosure, for example, the release films as described in FIGS. 1 and 2.

At step 148, the curable polymer in the phosphor material 106 is cured. Step 148 is optional when phosphor material 106 comprises a curable polymer.

The inlay layer comprising a display module 74 can be made separately first and then connected with other electronic components in the inlay layer in some embodiments. Display module 74 can be also made in one inlay layer on which other electronic components are disposed through a one-step process.

### 2. Information Carrying Cards

In some embodiments, an information carrying card comprises a core layer described above. In some embodiments, the information carrying card further comprises at least one printable thermoplastic film laminated onto the surface of the core layer. The information carrying card further comprises at least one transparent film laminated onto the surface of the printable thermoplastic film in some embodiments. The information carrying card further comprises a radio frequency (RF) antenna, a magnetic strip and signature panel in some embodiments. The information carrying card may also comprise at least one sheet of metal, ceramic, metal containing material, ceramic containing material, plastics or the like.

In some embodiments, the invention also provides a method for fabricating an information carrying card. The method comprises forming a core layer of the information carrying card in this disclosure. The method may further comprise heat laminating a printable thermoplastic film and a transparent thermoplastic film on at least one side of the core layer of the information. In some embodiments, a printable thermoplastic film is laminated on one side of the core layer of the information carrying card. A transparent thermoplastic film is laminated on the printable thermoplastic film. In some embodiments, a printable thermoplastic film is laminated on each side of the core layer of the information carrying card. A transparent thermoplastic film is the laminated on the printable thermoplastic film on each side of the core layer of the information carrying card.

Referring to FIGS. 29 -34, an exemplary process 150 of making an exemplary information carrying card includes the following steps as shown in FIG. 34. The layer structure at different steps of an exemplary process 150 is shown in FIGS. 29-33. Referring to FIG. 29, a transparent film 132 is provided first. A transparent film 132 can be used as the outer layer of an information carrying card. Examples of transparent film 132 include but are not limited to PVC and PET. In step 152 of FIG. 34, referring to the structure shown in FIG. 30, a printable thermoplastic film layer 134 is disposed onto the transparent film 132. The printable thermoplastic film 134 is an imaging receiving layer. Words or images can be printed onto the printable thermoplastic film 134 before or during a process of making an information card. In some embodiments, this film is not transparent, and contains some pigments such as white pigments.

In step 154 of FIG. 34, a core layer 80 is disposed onto the printable thermoplastic layer 134 and the transparent film 132. One resulting exemplary layer structure is shown in FIG. 29. Referring again to FIG. 9, in some embodiments, an exemplary core layer 80 comprises a first thermoplastic layer 6, an inlay layer 8, and a cross-linked polymer composition 16. Inlay layer 8 comprises electronic components 10, for example, at least one printed circuit board (PCB), supporting film 12 and interconnects 14. The electronic components, such as a battery and an active or passive electronic components 10, are connected with interconnects 14. Electronic components 10 are embedded or surface-mounted on supporting film 14. Cross-linked polymer composition 16 fills the voids and remaining spaces inside the cavity on first thermoplastic layer 6 and inlay layer 8. In some embodiments, cross-linked polymer composition 18 directly contacts the outer surface of electronic components 10.

In step 156 (FIG. 34), a second printable thermoplastic layer 134 is disposed onto the layered structure of FIG. 31, followed by a second transparent film 132. The exemplary resulting layer structures are shown in FIGS. 32 and 33. In some embodiments, at least one release film is used on each side of the layer structure of FIG. 33. Referring to FIGS. 1 and 2, examples of the release film include a sheet of polytetrafluoroethylene, any other fluoropolymer, silicone, a fluoropolymer or silicone coated films. In some embodiments, a breathable release film is used.

In step 158 (FIG. 34), the exemplary layer structure after step 156 is laminated under a pressure at a raised temperature. The layered structure after step 156 is pressed under a pressure. In some embodiments, the pressure is less than 2 MPa. The layered sandwich structure is then is heated at a raised temperature under the pressure. A suitable temperature is sufficiently high so that all the films are laminated with good adhesion. In some embodiments, the temperature is in the range of 65-232 °C. In some embodiments, the temperature is less than 150 °C. The information carrying card may have different sizes. In some embodiments, the information card may have a size following ISO/IEC 7810 standard. For example, an ID-1 type smart card, which is for most of the banking card and ID cards, has a size of 85.6 x 53.98 mm.

In some embodiments, the exemplary process 150 comprises a process such as surface treatment to improve adhesion between two layers. Examples of surface treatment methods include but are not limited to plasma treatment or corona treatment before hot lamination at step 158.

The exemplary processes 20 (or 21) and 150 can be used to make a plurality of information carrying cards on one sheet, in accordance with some embodiments. In such process, a first thermoplastic layer 6 comprises a plurality of cavity, in which an inlay layer 8 is disposed partially or fully into each cavity. An exemplary core layer structure comprising a plurality of inlay layer 8 can be fabricated using processes 20 (or 21) as described above. The resulting information carrying cards can be made using process 150. They information carrying cards are then cut after thermal lamination.

Although the subject matter has been described in terms of exemplary embodiments, it is not limited thereto.

## Claims

1. A core layer for an information carrying card comprising:
at least one thermoplastic layer;
an inlay layer, ; and
a crosslinked polymer composition disposed over the at least one thermoplastic layer and contacting the inlay layer,
said core layer being **characterized in that**
the inlay layer comprises at least one electronic component configured to display a one time passcode (OTP), **in that** said at least one thermoplastic layer defines at least one cavity and **in that** at least one portion of the inlay layer is disposed inside the at least one cavity.

2. The core layer for an information carrying card of claim 1 wherein the at least one thermoplastic layer is selected from the group consisting of polyvinyl chloride, copolymer of vinyl chloride, polyolefin, polycarbonate, polyester, polyamide, and acrylonitrile butadiene styrene copolymer (ABS).

3. The core layer for an information carrying card of claim 1 wherein the at least one electronic component in the inlay layer configured to display a one time passcode (OTP) comprises:
a power source;
at least one microcontroller connected with the power source;
an activation switch connected with the at least one microcontroller; and
a display module connected with the activation switch.

4. The core layer for an information carrying card of claim 3 wherein the display module is configured to display at least a digit selected from a group consisting of 0, 1, 2, 3, 4, 5, 6, 7, 8, and 9.

5. The core layer for an information carrying card of claim 3 wherein the display module comprises at least one seven-segment display, each of the at least one seven-segment display configured to display a digit selected from 0 to 9.

6. The core layer for an information carrying card of claim 3 wherein the display module comprises a frame, a plurality of light emitting diode (LED) components disposed inside the frame, and a phosphor material disposed inside the frame and contacting the plurality of LED components.

7. The core layer for an information carrying card of claim 6 wherein the phosphor material comprises a polymer and/or a dopant.

8. The core layer for an information carrying card of claim 6 wherein the phosphor material is configured to display one color preferably selected from green, yellow and red.

9. The core layer for an information carrying card of claim 3 wherein the power source is a battery or a rechargeable battery.

10. The core layer for an information carrying card of claim 3 wherein the at least one microcontroller comprises a primary microcontroller and a dual interface microncontroller.

11. The core layer for an information carrying card of claim 3 wherein the activation switch is selected from a group consisting of a capacitance switch, a membrane switch, a metal dome switch, and a piezoelectric switch.

12. The core layer for an information carrying card of claim 3 wherein the inlay layer comprises at least one integrated circuit (IC) comprising algorithm and configured to generate an OTP value to be displayed in the display module.

13. The core layer for an information carrying card of claim 1 wherein the crosslinked polymer composition comprises
a base unit selected from the group consisting of acrylate, methacrylate, urethane acrylate, ester acrylate, silicone acrylate, epoxy acrylate, silicone, urethane and epoxy, preferably the base unit is urethane or epoxy.

14. The core layer for an information carrying card of claim 1 wherein the crosslinked polymer composition is unfilled.

15. An information carrying card comprising the core layer of claim 1.

## Patentansprüche

1. Kernschicht für eine informationstragende Karte mit:
mindestens einer thermoplastischen Schicht;
einer Einlageschicht, ; und
einer quervernetzten Polymerzusammensetzung, die über die mindestens eine thermoplastische Schicht angeordnet ist und die Einlageschicht kontaktiert,
welche besagte Kernschicht **dadurch gekennzeichnet ist, dass**
die Einlageschicht mindestens eine elektronische Komponente aufweist, die dazu ausgebildet ist, einen einmaligen Passcode (OTP) anzuzeigen, dass besagte mindestens eine thermoplastische Schicht mindestens einen Hohlraum definiert, und dass mindestens ein Abschnitt der Einlageschicht innerhalb des mindestens einen Hohlraums angeordnet ist.

2. Kernschicht für eine informationstragende Karte von Anspruch 1, bei der die mindestens eine thermoplastische Schicht aus der Gruppe ausgewählt ist, die aus Polyvinylchlorid, Copolymer von Vinylchlorid, Polyolefin, Polycarbonat, Polyester, Polyamid und AcrylnitrilButadien-Styrol-Copolymer (ABS) besteht.

3. Kernschicht für eine informationstragende Karte von Anspruch 1, bei der die mindestens eine elektronische Komponente in der Einlageschicht, die dazu ausgebildet ist, einen einmaligen Passcode (OTP) anzuzeigen, aufweist:
eine Stromquelle;
mindestens einen Mikrocontroller, der mit der Stromquelle verbunden ist;
einen Aktivierungsschalter, der mit dem mindestens einen Mikrocontroller verbunden ist; und
ein Anzeigemodul, das mit dem Aktivierungsschalter verbunden ist.

4. Kernschicht für eine informationstragende Karte von Anspruch 3, bei der das Anzeigemodul dazu ausgebildet ist, zumindest eine Ziffer anzuzeigen, die aus einer Gruppe ausgewählt wird, die aus 0, 1, 2, 3, 4, 5, 6, 7, 8 und 9 besteht.

5. Kernschicht für eine informationstragende Karte von Anspruch 3, bei der das Anzeigemodul mindestens eine Siebensegmentanzeige aufweist, bei der jede der mindestens einen Siebensegmentanzeige dazu ausgebildet ist, eine Ziffer anzuzeigen, die aus 0 bis 9 ausgewählt wird.

6. Kernschicht für eine informationstragende Karte von Anspruch 3, bei der das Anzeigemodul einen Rahmen, eine Mehrzahl von Leuchtdioden-(LED-)Komponenten, die innerhalb des Rahmens angeordnet sind, und ein Leuchstoffmaterial, das innerhalb des Rahmens angeordnet ist und die Mehrzahl von LED-Komponenten kontaktiert, aufweist.

7. Kernschicht für eine informationstragende Karte von Anspruch 6, bei der das Leuchtstoffmaterial ein Polymer und/oder einen Dotierungsstoff aufweist.

8. Kernschicht für eine informationstragende Karte von Anspruch 6, bei der das Leuchtstoffmaterial dazu ausgebildet ist, eine Farbe anzuzeigen, die vorzugsweise aus Grün, Gelb und Rot ausgewählt ist.

9. Kernschicht für eine informationstragende Karte von Anspruch 3, bei der die Stromquelle eine Batterie oder eine wiederaufladbare Batterie ist.

10. Kernschicht für eine informationstragende Karte von Anspruch 3, bei der der mindestens eine Mikrocontroller einen primären Mikrocontroller und einen Dual-Schnittstellen-Mikrocontroller aufweist.

11. Kernschicht für eine informationstragende Karte von Anspruch 3, bei der der Aktivierungsschalter aus einer Gruppe ausgewählt ist, die aus einem Kapazitätsschalter, einem Membranschalter, einem Metallkuppelschalter und einem piezoelektrischen Schalter besteht.

12. Kernschicht für eine informationstragende Karte von Anspruch 3, bei der die Einlageschicht mindestens eine integrierte Schaltung (IC) aufweist, die einen Algorithmus aufweist und dazu ausgebildet ist, einen OTP-Wert, der in dem Anzeigemodul anzuzeigen ist, zu erzeugen.

13. Kernschicht für eine informationstragende Karte von Anspruch 1, bei der die quervernetzte Polymerzusammensetzung
eine Basiseinheit aufweist, die aus der Gruppe ausgewählt ist, die aus Acrylat, Methacrylat, Urethanacrylat, Esteracrylat, Silikonacrylat, Epoxyacrylat, Silikon, Urethan und Epoxid besteht, vorzugsweise ist die Basiseinheit Urethan oder Epoxid.

14. Kernschicht für eine informationstragende Karte von Anspruch 1, bei der die quervernetzte Polymerzusammensetzung ungefüllt ist.

15. Informationstragende Karte mit der Kernschicht von Anspruch 1.

## Revendications

1. Couche centrale pour une carte de support d'informations comprenant :
au moins une couche thermoplastique ;
une couche d'incrustation ; et
une composition de polymère réticulé disposée sur l'au moins une couche thermoplastique et en contact avec la couche d'incrustation,
ladite couche centrale étant **caractérisée en ce que** la couche d'incrustation comprend au moins un composant électronique configuré pour afficher un mot de passe à usage unique (OTP), **en ce que** ladite au moins une couche thermoplastique définit au moins une cavité et **en ce qu'**au moins une partie de la couche d'incrustation est disposée à l'intérieur de l'au moins une cavité.

2. Couche centrale pour une carte de support d'informations selon la revendication 1 dans laquelle l'au moins une couche thermoplastique est sélectionnée dans le groupe constitué d'un polychlorure de vinyle, d'un copolymère de chlorure de vinyle, d'une polyoléfine, d'un polycarbonate, d'un polyester, d'un polyamide, et d'un copolymère d'acrylonitrile butadiène styrène (ABS).

3. Couche centrale pour une carte de support d'informations selon la revendication 1 dans laquelle l'au moins un composant électronique dans la couche d'incrustation configuré pour afficher un mot de passe à usage unique (OTP) comprend :
une source d'alimentation ;
au moins un microcontrôleur connecté à la source d'alimentation ;
un commutateur d'activation connecté à l'au moins un microcontrôleur ; et
un module d'affichage connecté au commutateur d'activation.

4. Couche centrale pour une carte de support d'informations selon la revendication 3 dans laquelle le module d'affichage est configuré pour afficher au moins un chiffre sélectionné dans un groupe constitué de 0, 1, 2, 3, 4, 5, 6, 7, 8, et 9.

5. Couche centrale pour une carte de support d'informations selon la revendication 3 dans laquelle le module d'affichage comprend au moins un affichage à sept segments, chacun de l'au moins un affichage à sept segments étant configuré pour afficher un chiffre sélectionné parmi 0 à 9.

6. Couche centrale pour une carte de support d'informations selon la revendication 3 dans laquelle le module d'affichage comprend un cadre, une pluralité de composants de diode électroluminescente (DEL) disposés dans le cadre, et un matériau luminophore disposé à l'intérieur du cadre et en contact avec la pluralité de composants de DEL.

7. Couche centrale pour une carte de support d'informations selon la revendication 6 dans laquelle le matériau luminophore comprend un polymère et/ou un dopant.

8. Couche centrale pour une carte de support d'informations selon la revendication 6 dans laquelle le matériau luminophore est configuré pour afficher une couleur sélectionnée de préférence parmi le vert, le jaune et le rouge.

9. Couche centrale pour une carte de support d'informations selon la revendication 3 dans laquelle la source d'alimentation est une batterie ou une batterie rechargeable.

10. Couche centrale pour une carte de support d'informations selon la revendication 3 dans laquelle l'au moins un microcontrôleur comprend un microcontrôleur primaire et un microcontrôleur à double interface.

11. Couche centrale pour une carte de support d'informations selon la revendication 3 dans laquelle le commutateur d'activation est sélectionné dans un groupe constitué d'un commutateur capacitif, d'un commutateur à membrane, d'un commutateur à dôme métallique, et d'un commutateur piézoélectrique.

12. Couche centrale pour une carte de support d'informations selon la revendication 3 dans laquelle la couche d'incrustation comprend au moins un circuit intégré (CI) comprenant un algorithme et configuré pour générer une valeur OTP à afficher dans le module d'affichage.

13. Couche centrale pour une carte de support d'informations selon la revendication 1 dans laquelle la composition de polymère réticulé comprend
un motif de base sélectionné dans le groupe constitué d'un acrylate, d'un méthacrylate, d'un acrylate d'uréthane, d'un acrylate d'ester, d'un acrylate de silicone, d'un époxy acrylate, d'une silicone, d'un uréthane et d'un époxy, de préférence le motif de base est un uréthane ou un époxy.

14. Couche centrale pour une carte de support d'informations selon la revendication 1 dans laquelle la composition de polymère réticulé n'est pas chargée.

15. Carte de support d'informations comprenant la couche centrale selon la revendication 1.
